# EUROPEAN PATENT SPECIFICATION

(11) **EP 3 505 030 B1**
(45) Date of publication and mention of the grant of the patent: **27.04.2022**
(21) Application number: 17211176.7
(22) Date of filing: 29.12.2017
(51) Int. Cl.: A47K 3/30, F16B 2/18, F16B 7/04

(54) **FIXING MEMBER FOR SHOWER PROFILES**
BEFESTIGUNGSELEMENT FÜR DUSCHPROFILE
ÉLÉMENT DE FIXATION POUR PROFILS DE DOUCHE

(43) Date of publication of application: 03.07.2019
(73) Proprietor: Geberit International AG, 8645 Jona (CH)
(72) Inventor: MATTSSON, Martin, 375 34 Mörrum (SE)
(74) Representative: Ström & Gulliksson AB

(56) References cited:
- FR-A1- 2 267 472
- US-A- 3 182 771
- US-A- 5 624 201

## Description

### Technical Field

The present invention relates to a fixing member for shower profiles, and in particular to a fixing member for fixating a horizontal profile with a vertical profile in a shower assembly such as shower cubicles or shower enclosures. The present invention further relates to a shower assembly comprising such fixing member and a method of mounting a shower assembly using the fixing member.

### Background

Shower assemblies, such as shower cubicles and shower enclosures, are commonly used when installing a shower to a building. The installation process includes assembling shower profiles to each other using fixation means. This process may be difficult due to space constraints in the bathroom where the shower cubicle or shower enclosure is placed. The profiles are often arranged at a high vertical position, thus making it difficult for the installer to get a good view of the fixating means used to connect the profiles to each other. Examples of profile assemblies are taught by US5624201, FR2267472, and US3182771.

There is thus a need for an improved fixing member that allows for more easier installation while being even cheaper to manufacture.

### Summary

Accordingly, the present invention preferably seeks to mitigate or eliminate one or more of the above-identified deficiencies in the art singly or in any combination and solves at least the above mentioned problems by providing an improved fixing member.

A first aspect of the invention refers to an arrangement comprising a fastening member and a fixing member for fixating a horizontal profile with a vertical profile in a shower assembly. The fixing member comprises a main body having a first end portion, a second end portion and an elevated portion arranged there between, said elevated portion being configured to be in close conjunction with a lower surface of an upper profile portion of the horizontal profile, if the fixing member is fixated to the horizontal profile; wherein the fixing member further comprises a hook portion being arranged at the second end portion to engage with a recess in the vertical profile.

According to the invention, the main body comprises an opening, which is arranged between the elevated portion and the first end portion and is designed to receive a fastening member in order to fixate the fixing member to the horizontal profile, and the fixing member further comprises at least one resilient member, which is either arranged at the first end portion and embodied as a wing portion or which is arranged above the opening and embodied as a spring, said opening being in the form of a through hole on the main body, said resilient member being configured to keep a part of the fixing member at a distance from the lower surface of the horizontal profile, thereby keeping the hook portion at a distance from the horizontal profile during assembly, and wherein the fixing member is configured to be arranged in a mounting position and in a restrained position, wherein in the mounting position the hook portion is held at the distance from the horizontal profile as it is prevented by the resilient member from falling downwards and inwards towards the horizontal profile and in the restrained position the at least one resilient member is compressed by pressure applied by the fastening member, reducing the distance between the hook portion and the horizontal profile by the hook portion being forced downwards and inwards towards the horizontal profile, such that the vertical profile is clamped towards the horizontal profile. Since the resilient member keeps the hook portion at a distance from the horizontal profile, it is easy for the installer to guide the hook portion of the fixing member into the recess.

In one of two alternatives, the at least one resilient member is a spring.

In the other alternative, the at least one resilient member is a wing portion.

The fixing member is configured to be arranged in the mounting position and in the restrained position, wherein in the mounting position the wing portion is arranged with a mounting angle from the main body and in the restrained position the wing portion is arranged with a restraining angle from the main body, wherein the restraining angle is greater than the mounting angle. The fixing member may be arranged in a mounting position during the assembly of the horizontal profile and the vertical profile. The fixing member may be arranged in a restrained position once the horizontal profile and the vertical profile are fixated to each other. The position of the fixing member may be changed from the mounting position to the restrained position once the fastening member is fastened and/or tightened in the opening of the fixing member.

In one embodiment, the hook portion and the wing portion mainly extends in an opposite direction from each other. The main body comprises an elevated portion. The fixing member may be constructed in aluminium, plastic or composite.

In one embodiment, the main body, the hook portion and the at least one wing portion are constructed as one piece.

In an alternative embodiment, the main body and the at least one wing portion are constructed as separate elements, and wherein the first end portion of the main body comprises a receiving section configured to receive the wing portion.

A second aspect of the invention refers to a shower assembly. The shower assembly comprises at least one arrangement according to the first aspect, at least one horizontal profile and at least one vertical profile.

The horizontal profile may comprise an upper profile portion and a lower profile portion, and the vertical profile comprises a vertically extending recess, and wherein the fixing member is arranged between the upper profile portion and the lower profile portion.

The upper profile portion of the horizontal profile may comprise at least one opening configured to receive a fastening member in order to fixate the fixing member to the horizontal profile. The opening may be a through hole.

In one embodiment, the upper profile portion of the horizontal profile further comprises an upper surface and a lower surface, wherein a top end of a resilient member of the arrangement, which is in the form of a wing portion, is arranged in a position in close conjunction with the lower surface of the upper profile portion.

A third aspect of the invention refers to a method of mounting a shower assembly is provided. The method comprises the steps of providing a fixing member of an arrangement according to the first aspect, a vertical profile having a recess and a horizontal profile having an upper profile portion and a lower profile portion, arranging the fixing member between the upper profile portion and the lower profile portion, arranging the hook portion of the fixing member into the recess of the vertical profile, fastening a fastening member to the fixing member and the horizontal profile so that the fixing member changes position from a mounting position to a restrained position.

In the mounting position and if a resilient member of the arrangement is in the form of a wing portion, the wing portion may be arranged with a mounting angle from the main body and in the restrained position the wing portion is arranged with a restraining angle from the main body, wherein the restraining angle is greater than the mounting angle.

When the fixing member changes position from a mounting position to a restrained position, the hook portion clamps the vertical profile towards the horizontal profile.

### Brief Description of Drawings

Further objects, features and advantages will appear from the following detailed description, with reference being made to the accompanying drawings, in which:
Fig. 1 is an isometric side view of a part of a shower according to an embodiment;
Fig. 2a is a side view of a fixing member according to a first embodiment;
Fig. 2b is an isometric side view of a fixing member according to a first embodiment;
Fig. 3 is a top view of a fixing member according to a first embodiment;
Fig. 4a is an isometric side view of a fixing member according to a second embodiment;
Fig. 4b is an isometric side view of a fixing member according to a second embodiment;
Fig. 5a is an isometric side view of a fixing member according to a third embodiment;
Fig. 5b is an isometric side view of a fixing member according to a third embodiment;
Fig. 6a is an isometric side view of a part of a frame structure and a fixing member according to Figs. 2-3 being arranged in a mounting position according to an embodiment;
Fig. 6b is an isometric side view of a part of a frame structure and a fixing member according to Figs. 2-3 being arranged in a mounting position according to an embodiment;
Fig. 7 is an isometric side view of a fixing member according to Figs. 2-3 being arranged in a mounting position according to an embodiment;
Fig. 8 is an isometric side view of a fixing member according to Figs. 2-3 being arranged in a restrained position according to an embodiment;
Fig. 9 is an isometric side view of a fixing member according to Fig. 5a-b being arranged in a mounting position according to an embodiment; and
Fig. 10 is a block scheme illustrating a method of mounting a shower assembly using a fixing member according to an embodiment.

### Detailed Description

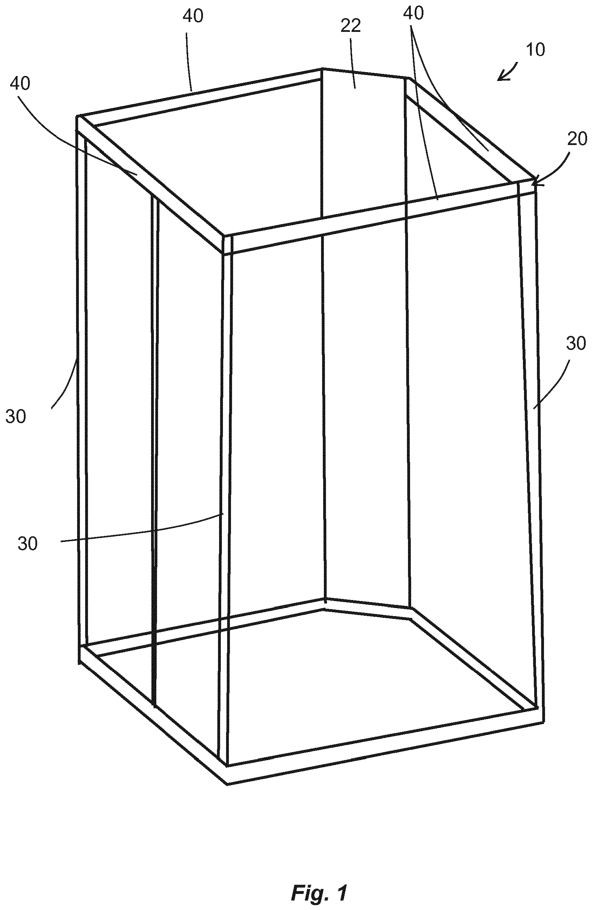

Fig. 1 illustrates a shower enclosure or shower cubicle 10. The shower cubicle or shower enclosure 10 comprises a frame structure 20 and a plurality of shower panels. The frame structure 20 may comprises a column 22, horizontal profiles 40 and vertical profiles 30.

In the embodiment shown in Fig. 1, the frame structure 20 comprises a plurality of vertical profiles 30 and a plurality of horizontal profiles 40 creating a frame like structure. The number of horizontal and vertical profiles 30, 40 depends on the cross-sectional shape of the shower cubicle. The cross-sectional shape of the shower cubicle may for example be in the form of a square, polygon, a rectangle or pentagonal.

The column 22 may also be seen as a vertical profile. The column 22 extends in a vertical direction to define the vertical extension of the shower cubicle. Preferably, the column 22 is provided with suitable connections for supplying water. The column 22 may for example be provided with a water mixing tap whereby the user is allowed to open and close the supply of water, as well as adjusting the desired temperature of the discharged water by applying the correct mix of hot and cold water.

The plurality of shower panels are extending vertically along the length of the vertical profiles 30 to form an enclosure. In the embodiment shown in Fig. 1, the shower cubicle 10 comprises four shower panels. However, it should be understood that the number of shower panels depends on the cross-sectional shape of the shower cubical. The shower panels may be fixed panels or doors. The shower panels are preferably made of a thin body such as glass, plastic, or similar.

At least one of the shower panels may be provided as a shower door panel.

Said at least one shower panel is movably supported by the frame structure 20 such that it may be opened and closed. Preferably, the opening and closing may be performed by a sliding movement where the shower door panel(s) are guided in a groove (not shown) in the frame structure 20. The shower door panels may be arranged on guide units (not shown) that are guided in the groove to allow opening and closing of the shower door panels. Once closed, the shower panels should seal against the shower tray or bathroom floor such that water is prevented from escaping out from the showering area 10.

In an alternative embodiment, the opening and closing may be performed by a pivoting action of the particular shower panels.

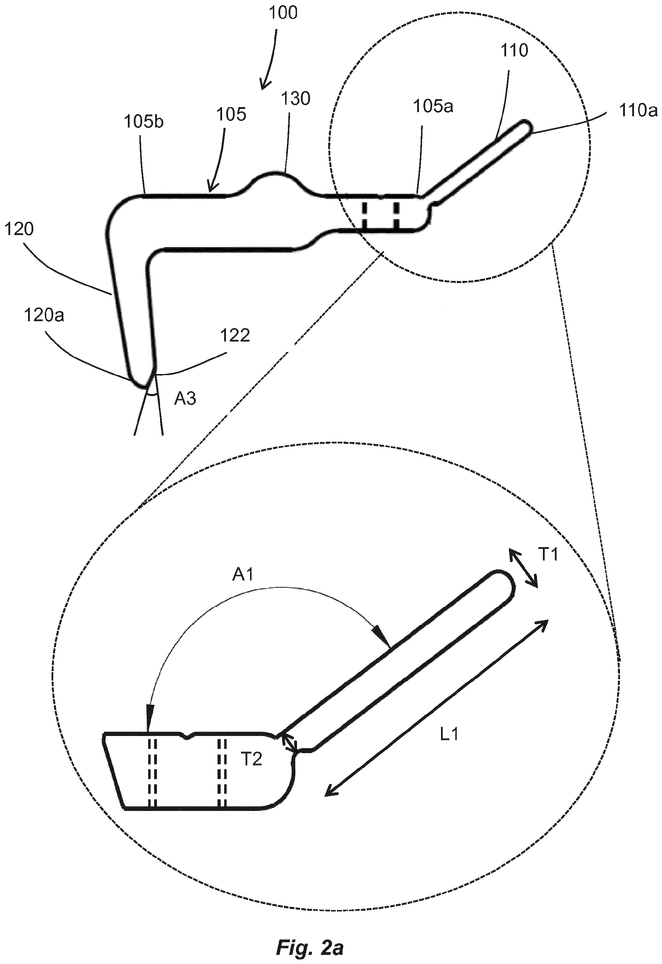

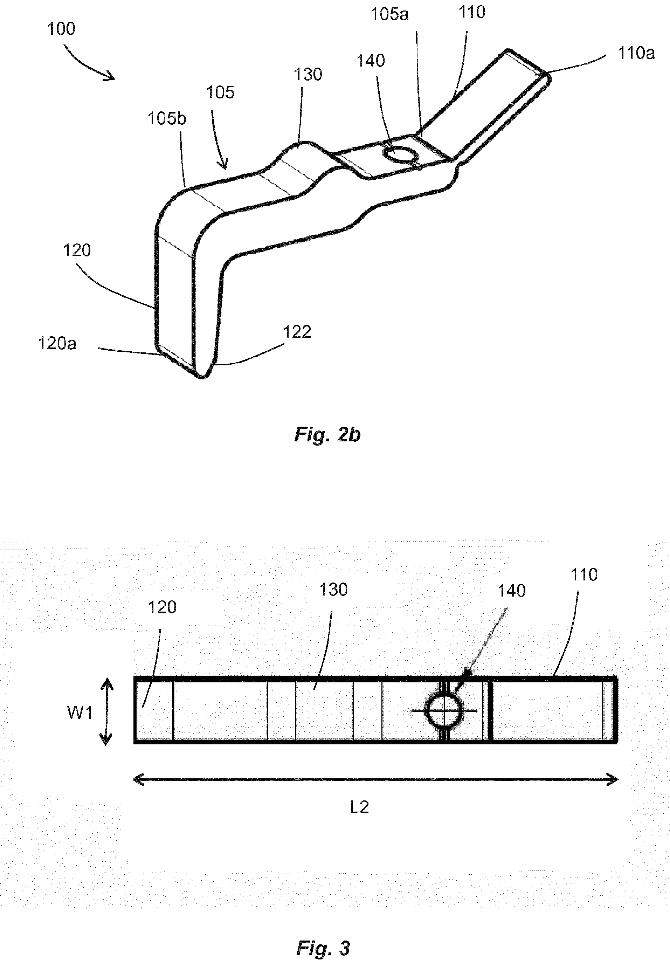

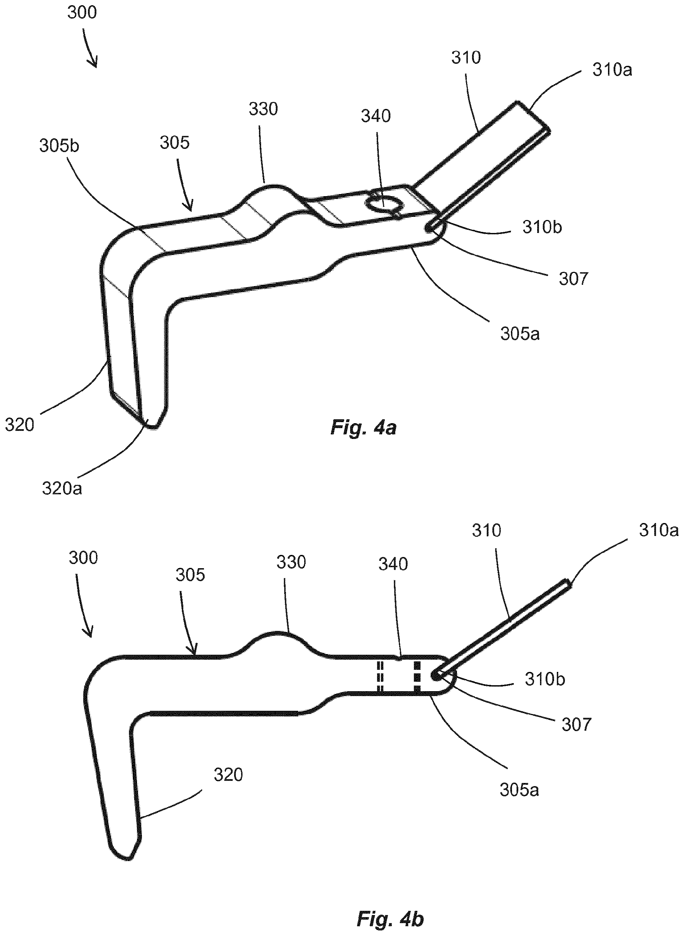

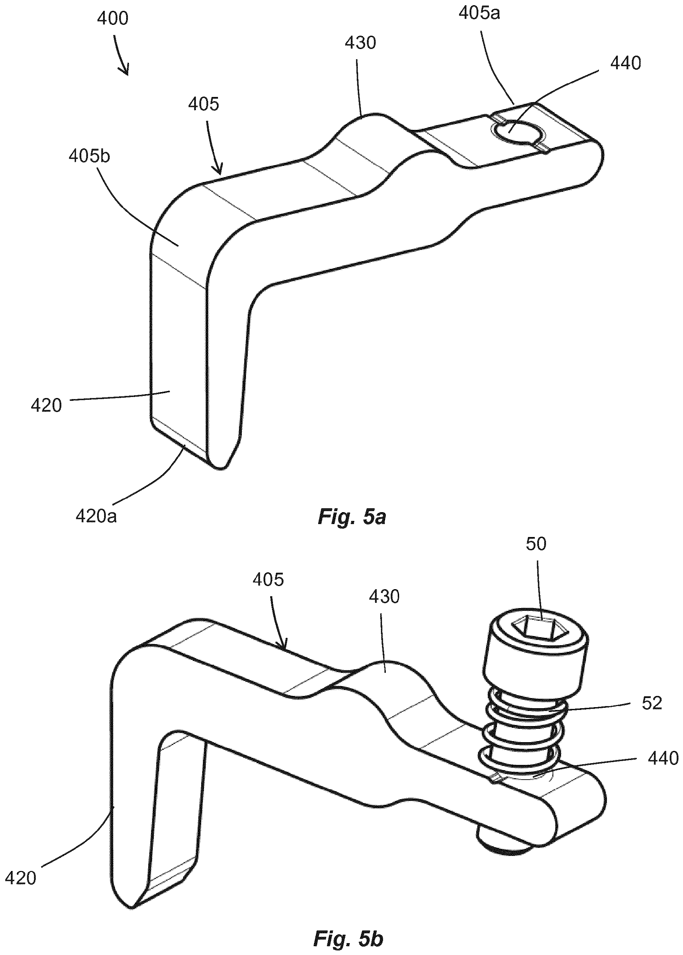

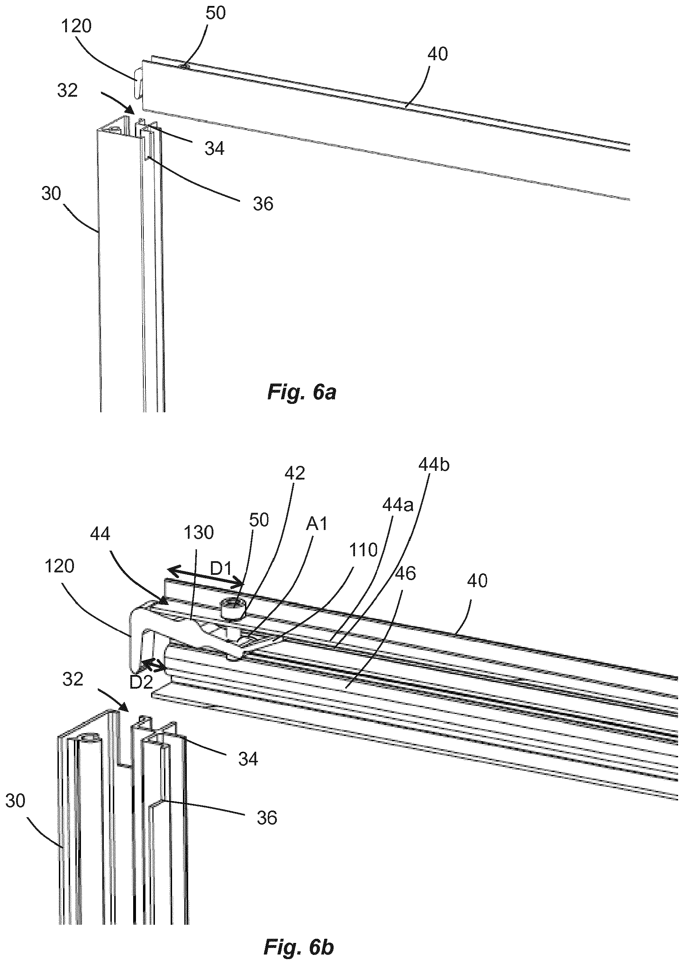

The horizontal profiles 40 and the vertical profiles 30 are fixated to each other by a fixation arrangement. The fixation arrangement described herein can also be used to fixate a horizontal profile with the column 22. The fixation arrangement comprises a fixing member 100 that is arranged in a horizontal profile 40 and that engages in a vertical profile 40. Some of the benefits of this novel fixing member 100; 300; 400 is that the installation process is simplified and that the manufacturing process is cheaper. The first time the shower cubicle or shower enclosure is assembled, the fixing member 100; 300; 400 described herein will always be arranged in a position that makes it easier for the installer to fit the fixing member into the profile. A first embodiment of the fixing member 100; 300; 400 will now be described in detail with reference to Figs. 2-3,a second embodiment with reference to Figs. 4a-b and a third embodiment with reference to Figs. 5a-b, before turning to the whole fixing arrangement with reference to Fig. 6 - 9. The embodiments herein all comprise a resilient member made of a resilient material that keeps a part of the fixing member at a distance from the horizontal profile during assembly.

As seen in Figs. 2a-b, the fixing member 100 comprises an elongated body 105 having a first end portion 105a and a second end portion 105b. Between the first end portion 105a and the second end portion 105b an elevated portion 130 is provided. The elevated portion 130 is preferably arranged as a raised structure in the form of a semicircle.

In this embodiment, the wing portion 110 and the main body 105 are constructed as one piece. Hence, the whole fixing member 100 is constructed as one unit. The fixing member 100 is preferably constructed from metal, and more preferably constructed in aluminium. However, the fixing member 100 could also be constructed in plastic or a composite material. In some embodiments, the fixing member could also be constructed in other materials that allows for some deformation. Preferably, the surfaces of the fixing member 100 are substantially flat, i.e. there are no grooves or small protrusions arranged on its surface.

In this first embodiment, a wing portion 110 is arranged at the first end portion 105a of the main body. The wing portion 110 comprises a top end 110a that is arranged at the end of the wing portion 110 that faces away from the main body 105. Before assembly of the fixing member 100 in the frame structure 20, the wing portion 110 is arranged with a mounting angle A1 from the main body 105. In a preferred embodiment, the mounting angle A1 is between 130 and 160 degrees. More preferably, the mounting angle A1 is between 140 to 150 degrees.

The wing portion 110 has a length of L1. The length L1 may range from 12 to 25 mm, and more preferably around 18 mm. The main thickness of the wing portion 110 is T1 and preferably ranges between 1 and 3 mm. More preferably, the main thickness of the wing portion is around 2 mm. The thickness of the wing portion 110 may be tapered, so that the thickness is bigger in the portion facing away from the main body 105 of the fixing member 100. The tapered thickness is illustrated in Fig. 2a, where the thickness T2 of the wing portion 110 is smaller than the thickness T1 near the second end of the main body 105. The smaller thickness T2 may for example be around 1,5 mm.

At the second end portion 105b of the main body 105 of the fixing member 100, a hook portion 120 is arranged. The hook portion 120 extends in a direction mainly opposite the wing portion 110. The hook portion 120 comprises a first end 120a. When the fixing member 100 is assembled in the frame structure, the first end 120a of the hook portion 120 mainly faces downwards in the direction of the vertical profile 30. The first end 120a of the hook portion 120 is arranged with a tapered surface 122. The tapered surface 122 has an inclination of an angle A3. The angle A3 may range between 20 and 40 degrees, and more preferably the angle A3 is around 30 degrees.

Fig. 3 illustrates the fixing member 100 as seen from above. As seen in Fig. 3, the length of the main body 105 and the wing portion 110 is denoted L2. The length L2 of the main body 105 and the wing portion 110 is preferably around 50 to 70 mm, and more preferably around 59-62 mm long. The width of the main body 105, and the width of the wing portion 110, is denoted W1. The width W1 is preferably around 5 to 10 mm, and more preferably around 8 mm wide.

An opening 140, in the form of a through hole, is arranged on the main body 105 of the fixing claw 100. In this embodiment, the through hole 140 is arranged closer to the first end 105a of the main body than the second end 105b. As will be explained more with reference to Figs. 6-8, the through hole 140 is adapted to receive a fastening member 50 (as seen in Figs. 6a-b) such as a screw or similar. The fastening member 50 will be used to fixate the fixing member 100 to the frame structure 20.

If the fixing member 100 in Fig. 3 is seen from left to right, the hook portion 120 is arranged to the left end of the structure. The elevated portion 130 is arranged between the hook portion 120 and the through hole 140. The through hole 140 is in turn arranged between the elevated portion 130 and the wing portion 110. The wing portion 110 is thus arranged to the right end of the structure.

A second embodiment of the fixing member 100 is shown in Figs. 4a- 4b. The difference compared to the first embodiment according to Figs. 2-3 relates to the wing portion 310.

The fixing member 300 comprises an elongated body 305 having a first end portion 305a and a second end portion 305b. Between the first end portion 305a and the second end portion 305b an elevated portion 330 is provided. The elevated portion 330 is preferably arranged as a raised structure in the form of a semicircle. At the second end portion 305b of the main body 305 of the fixing member 300, a hook portion 320 is arranged. Additionally, an opening 340 in the form of a through hole, is arranged on the main body 305 of the fixing member 300.

The first end portion 305a of the main body comprises a receiving section 307 configured to receive a wing portion 310. The wing portion 310 comprises a top end 310a and a bottom end 310b. The bottom end 310b of the wing portion 310 is arranged to be received in the receiving section 307 of the main body 305. The top end 310a is arranged at the end of the wing portion 310 that faces away from the main body 305.

The wing portion 310 and the main body 305 are thus constructed as two separate elements. The wing portion 310 and the main body 305 may be constructed in the same material, or in different materials. The wing portion 310 may for example be constructed in spring steel, aluminium or any other deformable material. The main body 305 could for example be constructed in aluminium, plastic or a composite material. In some embodiments,

Before assembly of the fixing member 300 in the frame structure 20, the wing portion 310 is arranged with a mounting angle A1 from the main body 305 as described with reference to the first embodiment seen in Figs. 2-3.

The benefits of this embodiment is that the fixing member 300 will not deform permanently during mounting of the shower enclosure or cubicle, since it is easy to remove the deformed wing portion 310 and arrange a new one inside the receiving section of the main body.

A third embodiment of the fixing member 400 is shown in Figs. 5a- 5b. The difference compared to the previous embodiment relates to the resilient member.

The fixing member 400 comprises an elongated body 405 having a first end portion 405a and a second end portion 405b. Between the first end portion 405a and the second end portion 405b an elevated portion 430 is provided. The elevated portion 430 is preferably arranged as a raised structure in the form of a semicircle. At the second end portion 405b of the main body 405 of the fixing member 400, a hook portion 420 is arranged. Additionally, an opening 440 in the form of a through hole, is arranged on the main body 405 of the fixing member 400.

A resilient member 52 is arranged on top of the main portion 405 of the fixing member 400 above the through hole 440 on the main body 405, so that it will be compressed when the fastening member 50 is arranged above it and subsequently fastened and/or tightened. The resilient member 52 may be a blade spring, spiral spring or a compression spring.

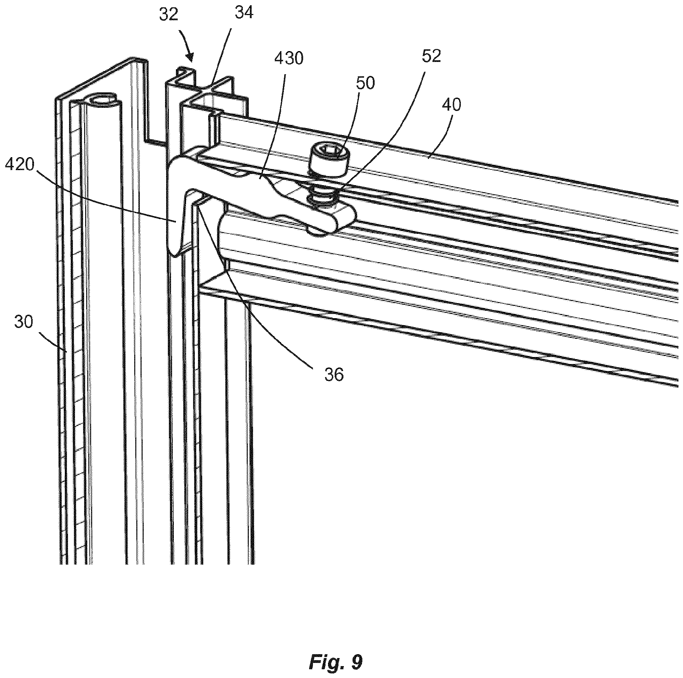

During assembly the resilient member 52 keeps the hook portion 420 at a distance from the horizontal profile. The resilient member 52 is kept in place by a fastening member 50. The fastening member 50 is preferably a screw, bolt, or similar structure. The fastening member 50 is to be arranged in the hole 440 of the fixing member 400. The cooperation between the resilient member 52 and the fastening member 50 will be described more in detail with reference to Fig. 9.

The benefits of this embodiment is that the fixing member 400 will not deform permanently during mounting of the shower enclosure or cubicle. If needed, the resilient member 52 can easily be replaced by a new member.

Figs. 6-8 illustrates different stages of the process of assembling a vertical profile 30 with a horizontal profile 40 using a fixing member 100, 300 where the resilient member 52 is a wing portion (as the embodiments shown in Figs. 2-3 and Figs. 4a-b). However, as will be apparent from Fig. 9, the same concept applies for the fixing member 400 having a spring 52 as the resilient member 52.

Figs. 6a-b shows the stage just before the horizontal profile 40 is connected with the vertical profile 30. Figs. 6a and 6b illustrates the same assembly stage, where the outer parts of the profiles 30, 40 have been removed in Fig. 6b to facilitate understanding.

The vertical profile 30 comprises a top portion 32. The top portion 32 comprises at least one recess 36. The recess 36 is preferably a vertically extending recess 36. The shape of the recess 36 is such that it is configured to receive the hook portion 120 of the fixing member 100; 300. The top portion 32 of the vertical profile 30 may also comprise a gripping structure 34. The gripping structure 34 may be arranged to receive a shower panel.

The horizontal profile 40 comprises an upper profile portion 44 and a lower profile portion 46. The upper profile portion 44 and a lower profile portion 46 both extends along the length of the profile 40. The upper profile portion 44 is arranged in a position above the lower profile portion 46.

The upper profile portion 44 comprises an upper surface 44a and a lower surface 44b. The upper surface 44a is arranged such that it is positioned above the lower surface 44b. The upper profile portion 44 of the horizontal profile 40 further comprises at least one through hole 42. The hole is preferably arranged at a distance D1 from an end of the horizontal profile 40. The distance D1 depends on the dimensions of the fixing member 100; 300, but may for example range between 20 and 60 mm. Although not shown, the horizontal profile 40 may be arranged with two through holes, each arranged at a distance D1 from each of the ends of the profile 40. In this way, the horizontal profile 40 may be connected to two vertical profiles 30.

The fixing member 100; 300 is fixated in the horizontal profile 40 by a fastening member 50. The fastening member 50 is preferably a screw, bolt, or similar structure. The fastening member 50 is to be arranged in the at least one through hole 42 of the upper profile portion 44 and through the hole 140; 340 of the fixing claw 100; 300 where it is fixated.

When the fixing member 100; 300 is arranged in the horizontal profile 40, the main body 105; 305 of the fixing member 100; 300 is arranged in between the upper profile portion 44 and the lower profile portion 46. The elevated portion 130; 330 is in close conjunction with the lower surface 44b of the upper profile portion 44. When the resilient member is a wing portion, the top end 110a; 310a of the wing portion 110; 330 is arranged in a position in close conjunction with the lower surface 44b of the upper profile portion 44.

In Figs. 6a-b, the fixing member 100; 300 is in an open position, also referred to as the mounting position, and the fixing member 100; 300 has not yet been arranged in the vertical profile 30 (hence the fastening member 50 has not yet been tightened). The fixing member 100; 300 is in an open position in the sense that the hook portion 120; 320 is prevented from falling down towards the vertical profile and/or from falling inwards towards the center of the horizontal frame 40 or the lower profile portion 46. This mounting position is maintained by the resilient member 110; 310, as soon will be described more in detail.

The mounting position facilitates the entry of the hook portion 120; 320 of the fixing member 100; 300 into the vertical profile. The assembly of the of the horizontal profile 40 onto the vertical profile 30, 22 is facilitated since the hook portion 120; 320 is clearly visible for the person installing the shower cubicle or shower enclosure, so that he/she easily can fit the hook portion 120; 320 into the recess 36 of the vertical profile 30.

When the fixing member 100, 300 is in an open position, the resilient member being a wing portion 110; 310 is arranged with a mounting angle A1 from the main body 105; 305. Once the vertical profile is assembled with the horizontal profile and the fastening member 50 is fastened or tightened, this angle, referred to as a restraining angle A2, will be changed due to the pressure generated once the fastening member 50 is fastened causing the wing portion 100; 300 to deform. When in the mounting position, the wing portion 110; 310 is arranged to keeping the hook portion 120; 320 at a distance D2 from the horizontal profile. The mounting position is thus used during assembly of the frame structure.

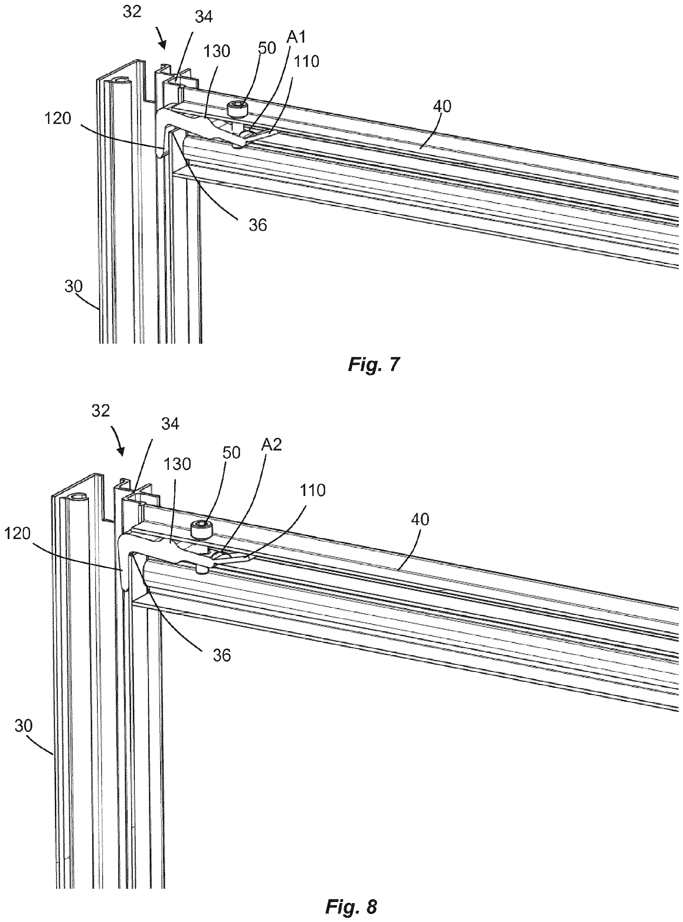

In Fig. 7, the horizontal profile 40 and the vertical profile 30 are assembled. The hook portion 120; 320 of the fixing member 100, 300 is thus arranged in the recess 36 of the vertical profile 30. In the position as shown in Fig. 7, the fastening member 50 has not yet been fastened or tightened. Hence, the wing portion 110; 310 is still arranged with an angle A1 from the main body 105, i.e. the fixing member 100; 300 is in the mounting position.

Fig. 8 illustrates the situation where the fastening member 50 has been fastened and/or tightened. The resilient member will be compressed by the applied pressure on the fastening member 50, so that the vertical profile 30 and the horizontal profile 40 are securely arranged to each other. During fastening of the fastening member 50, the hook portion 120; 320; 420 will clamp the vertical profile 30 towards the horizontal profile 40. The first end 120a; 320a; 420a of the hook portion 120; 320; 420 is forced downwards and/or inwards towards the lower profile portion 46 of the horizontal profile 40. In this way the distance between the hook portion 120; 320; 420 and the horizontal profile 40 is reduced from the original distance D2.

In the embodiment where the resilient member is a wing portion, the wing portion 110; 310 will be flattened by the pressure so that the angle between the wing portion 110; 310 and the main body 105; 305 of the fixing member 100; 300 is increased to a restraining angle A2. The restraining angle A2 is slightly increased compared to the original angle A1. Preferably, the restraining angle A2 is increased by 1 to 15 degrees compared to the original angle A1. In some embodiments the wing portion 110; 310 will flatten so much by the applied pressure that it breaks, which also has to be seen as an increased angle.

The vertical profile 30 and the horizontal profile 40 may be disassembled from each other by loosening or removing the fastening member 50. The fixing member 100; 300; 400 may be reused.

If the fixing member is constructed in one piece, as in the first embodiment relating to Figs. 2-3, the wing portion 110 is permanently deformed and the hook portion 120 will not be in an open position in its next assembly. Hence, when reused the fixing member 100, 300 will not have the benefit of the open position allowing for easy fitting of the hook portion 120 into the recess 36 of the vertical profile 30.

If the fixing member 300 is constructed in two pieces, as in the second embodiment relating to Figs. 4a-b, the wing portion 310 could be changed to a new wing portion 310 that has not been deformed, the fixing member 300 can be reused with the same benefits as a new fixing member.

Fig. 9 illustrates assembling of a vertical profile 30 with a horizontal profile 40 using the fixing member 400 according to the third embodiment shown in Figs. 5a-b. As previously been described, the resilient member is compressed by the applied pressure on the fastening member 50 so that the vertical profile 30 and the horizontal profile 40 are securely arranged to each other. During fastening of the fastening member 50, the hook portion 420 will clamp the vertical profile 30 towards the horizontal profile 40. The first end 420a of the hook portion 420 is forced downwards and/or inwards towards the lower profile portion 46 of the horizontal profile 40. In this way the distance between the hook portion 420 and the horizontal profile 40 is reduced from the original distance D2.

The vertical profile 30 and the horizontal profile 40 may be disassembled from each other by loosening or removing the fastening member 50. The resilient member 52 made from a resilient material, such as a blade spring, allows the fixing member (300) to be reused with the same benefits over and over again.

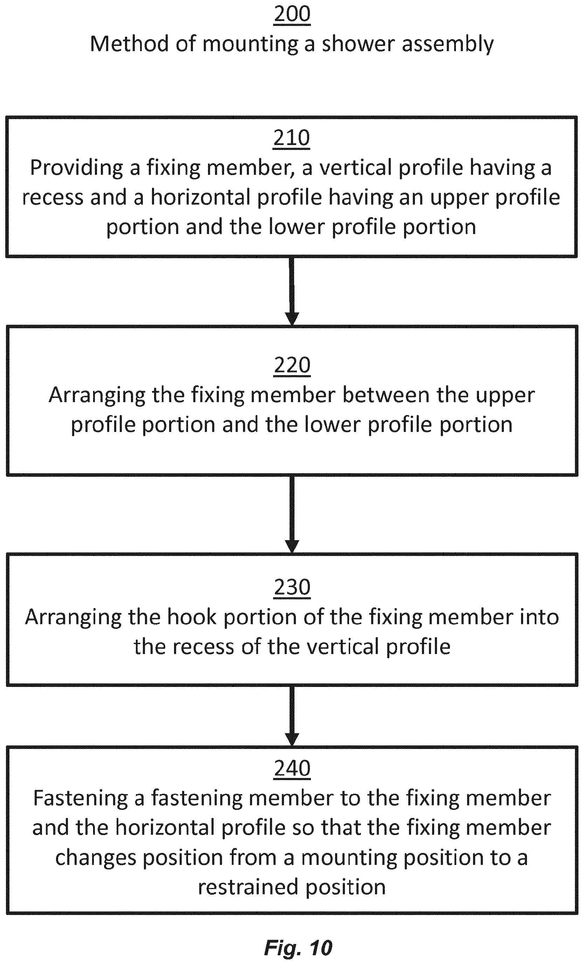

A method of mounting a shower assembly will now be described with reference to Fig. 10. In a first step 210, a vertical profile 30, a horizontal profile 40 and a fixing member 100; 300; 400 is provided. The fixing member 100; 300; 400 is arranged in a mounting position. In the embodiments where the resilient member is a wing portion, the wing portion 110; 310 is arranged with a mounting angle A1 from the main body 105; 305.

If the fixing member 300 is arranged as two separate pieces, with the main body 305 and the hook portion 320 as one piece and the resilient member being a wing portion 310 as another piece, an additional step is required where the wing portion 310 is arranged in the receiving section 307 of the main body 305 which is configured to receive the wing portion 310.

In a next step 220, the fixing member 100; 300; 400 is arranged in the horizontal profile 40. The fixing member 100; 300; 400 is arranged in between the upper profile portion 44 and the lower profile portion 46 so that the elevated portion 130; 330; 440 is in close conjunction with the lower surface 44b of the upper profile portion 44. In the embodiments where the resilient member is a wing portion, the top end 110a; 310a of the wing portion 110; 310 is arranged in a position in close conjunction with the lower surface 44b of the upper profile portion 44.

The resilient member 110; 310; 52 is arranged to keep the hook portion 120; 320; 420 at a distance D2 from the horizontal profile during the mounting process. The fastening member 50 is arranged, but not fastened, in order to keep the fixing member 100; 300; 400 in place.

In yet a further step, the installer places 230 the hook portion 120; 320; 420, being arranged in the horizontal profile 40, into the recess 36 of the vertical profile 30. Since the resilient member 110; 310; 52 keeps the hook portion 120; 320; 420 at a distance D2 from the horizontal profile, it is easy for the installer to guide the hook portion 120; 320; 420 into the recess 36.

In a next step 240, the fastening member 50 is fastened and tightened, so that the hook portion 120; 320; 420 will clamp the vertical profile 30 towards the horizontal profile 40. The resilient member will deform so that the horizontal profile 40 and the vertical profile 30 are securely arranged to each other.

In the embodiments where the resilient member is a wing portion, the wing portion 110; 310 will be flattened by the pressure, so that the angle between the wing portion 110; 310 and the main body 105; 305 of the fixing member 100; 300 is increased to a restraining angle A2 that is larger than the mounting angle A1.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. An arrangement comprising a fastening member (50) and a fixing member (100; 300; 400) for fixating a horizontal profile (40) with a vertical profile (30) in a shower assembly, wherein the fixing member (100; 300; 400) comprises:
a main body (105; 305; 405) having a first end portion (105a; 305a; 405a), a second end portion (105b; 305b; 405b) and an elevated portion (130; 330; 430) arranged there between, said elevated portion (130; 330; 430) being configured to be in close conjunction with a lower surface (44b) of an upper profile portion (44) of the horizontal profile (40), if the fixing member (100; 300; 400) is fixated to the horizontal profile (40); wherein the fixing member (100; 300; 400) further comprises:
a hook portion (120; 320; 420) being arranged at the second end portion (105b; 305b; 405b) to engage with a recess (36) in the vertical profile (30), whereby the main body (105; 305; 405) comprises an opening (140; 340; 440), which is arranged between the elevated portion (130; 330; 430) and the first end portion (105a; 305a; 405a) and is designed to receive the fastening member (50) in order to fixate the fixing member (100; 300; 400) to the horizontal profile (40);
and the fixing member (100; 300; 400) further comprises: at least one resilient member (110; 310; 52), which is either arranged at the first end portion (105a; 305a) and embodied as a wing portion (110; 310) or which is arranged above the opening (440) and embodied as a spring (52), said opening (140; 340; 440) being in the form of a through hole (140; 340; 440) on the main body (105; 305; 405), said resilient member (110; 310; 52) being configured to keep a part of the fixing member (100; 300; 400) at a distance from the lower surface (44b) of the horizontal profile (40), thereby keeping the hook portion (120; 320; 420) at a distance (D2) from the horizontal profile (40) during assembly;
and wherein the fixing member (100; 300; 400) is configured to be arranged in a mounting position and in a restrained position, wherein in the mounting position the hook portion (120; 320; 420) is held at the distance (D2) from the horizontal profile (40) as it is prevented by the resilient member (110; 310; 52) from falling downwards and inwards towards the horizontal profile (40);
and in the restrained position the at least one resilient member (110; 310; 52) is compressed by pressure applied by the fastening member (50), reducing the distance (D2) between the hook portion (120; 320; 420) and the horizontal profile (40) by the hook portion (120; 320; 420) being forced downwards and inwards towards the horizontal profile (40), such that the vertical profile (30) is clamped towards the horizontal profile (40).

2. The arrangement according to claim 1, wherein the at least one resilient member (110; 310) is a wing portion (110; 310).

3. The arrangement according to claim 2, wherein in the mounting position the wing portion (110; 310) is arranged with a mounting angle (A1) from the main body (105; 305) and in the restrained position the wing portion (110; 310) is arranged with a restraining angle (A2) from the main body (105; 305), wherein the restraining angle (A2) is greater than the mounting angle (A1).

4. The arrangement according to any one of the previous claims, wherein the fixing member (100; 300) is configured to be arranged in the mounting position during the assembly of the horizontal profile (40) and the vertical profile (30).

5. The arrangement according to any one of the previous claims, wherein the fixing member (100; 300) is configured to be arranged in the restrained position once the horizontal profile (40) and the vertical profile (30) are fixated to each other.

6. The arrangement according to any one of the previous claims, wherein the position of the fixing member (100; 300) is configured to be changed from the mounting position to the restrained position once the fastening member (50) is fastened and/or tightened in the opening (140; 340) of the fixing member (100; 300).

7. The arrangement according to any one claims 2 to 6, wherein the hook portion (120; 320) and the wing portion (110; 310) mainly extend in an opposite direction from each other.

8. The arrangement according to any one of claims 2 to 7, wherein the main body (105), the hook portion (120) and the at least one wing portion (110) are constructed as one piece.

9. The arrangement according to any one of claims 2-7, wherein the main body (305) and the at least one wing portion (310) are constructed as separate elements, and wherein the first end portion (305a) of the main body comprises a receiving section (307) configured to receive the wing portion (310).

10. A shower assembly comprising at least one arrangement according to any one of the claims 1-9, at least one a horizontal profile (40) and at least one vertical profile (30).

11. The shower assembly according to claim 10, wherein the horizontal profile (40) comprises an upper profile portion (44) and a lower profile portion (46), and the vertical profile (30) comprises a vertically extending recess (36), and wherein the fixing member (100; 300) is arranged between the upper profile portion (44) and the lower profile portion (46).

12. The shower assembly according to claim 11, wherein the upper profile portion (44) of the horizontal profile (40) comprises at least one opening (42) configured to receive a fastening member (50) in order to fixate the fixing member (100; 300) to the horizontal profile (40).

13. The shower assembly according to claim 11 or 12, wherein the upper profile portion (44) of the horizontal profile (40) further comprises an upper surface (44a) and a lower surface (44b), wherein a top end (110a; 310a) of a resilient member (110; 310) of the arrangement, which is in the form of a wing portion (110; 310), is arranged in a position in close conjunction with the lower surface (44b) of the upper profile portion (44).

14. A method of mounting a shower assembly, comprising the steps of:
providing (210) a fixing member of an arrangement according to any one of claims 1 to 9, a vertical profile having a recess and a horizontal profile having an upper profile portion and a lower profile portion;
arranging (220) the fixing member between the upper profile portion and the lower profile portion;
arranging (230) the hook portion of the fixing member into the recess of the vertical profile;
fastening (240) a fastening member to the fixing member and the horizontal profile so that the fixing member changes position from a mounting position to a restrained position.

15. The method according to claim 14, wherein a resilient member (110; 310) of the arrangement, which is in the form of awing portion (110; 310), is arranged at a first end portion (105a; 305a) of a main body (105; 305) of the arrangement, and wherein in the mounting position the wing portion (110; 310) is arranged with a mounting angle (A1) from the main body (105; 305) and in the restrained position the wing portion (110; 310) is arranged with a restraining angle (A2) from the main body (105; 305), wherein the restraining angle (A2) is greater than the mounting angle (A1).

## Patentansprüche

1. Anordnung, umfassend ein Anbringungselement (50) und ein Befestigungselement (100; 300; 400) zum Befestigen eines horizontalen Profils (40) an einem vertikalen Profil (30) in einer Duschanordnung, wobei das Befestigungselement (100; 300; 400) Folgendes umfasst:
einen Hauptkörper (105; 305; 405) mit einem ersten Endabschnitt (105a; 305a; 405a), einem zweiten Endabschnitt (105b; 305b; 405b) und einem dazwischen angeordneten erhöhten Abschnitt (130; 330; 430), wobei der erhöhte Abschnitt (130; 330; 430) dazu ausgestaltet ist, in enger Verbindung mit einer unteren Oberfläche (44b) eines oberen Profilabschnitts (44) des horizontalen Profils (40) zu stehen, wenn das Befestigungselement (100; 300; 400) an dem horizontalen Profil (40) befestigt ist; wobei das Befestigungselement (100; 300; 400) ferner Folgendes umfasst:
einen Hakenabschnitt (120; 320; 420), der an dem zweiten Endabschnitt (105b; 305b; 405b) dazu angeordnet ist, in eine Vertiefung (36) in dem vertikalen Profil (30) einzugreifen,
wobei der Hauptkörper (105; 305; 405) eine Öffnung (140; 340; 440) umfasst, die zwischen dem erhöhten Abschnitt (130; 330; 430) und dem ersten Endabschnitt (105a; 305a; 405a) angeordnet und dazu eingerichtet ist, das Anbringungselement (50) aufzunehmen, um das Befestigungselement (100; 300; 400) an dem horizontalen Profil (40) zu befestigen;
und das Befestigungselement (100; 300; 400) ferner Folgendes umfasst: mindestens ein elastisches Element (110; 310; 52), das entweder an dem ersten Endabschnitt (105a; 305a) angeordnet und als ein Flügelabschnitt (110; 310) ausgeführt ist oder das über der Öffnung (440) angeordnet und als eine Feder (52) ausgeführt ist, wobei die Öffnung (140; 340; 440) in Form eines Durchgangslochs (140; 340; 440) an dem Hauptkörper (105; 305; 405) vorliegt, wobei das elastische Element (110; 310; 52) dazu ausgestaltet ist, einen Teil des Befestigungselements (100; 300; 400) in einem Abstand von der unteren Oberfläche (44b) des horizontalen Profils (40) zu halten, wodurch der Hakenabschnitt (120; 320; 420) während des Zusammenbaus in einem Abstand (D2) von dem horizontalen Profil (40) gehalten wird;
und wobei das Befestigungselement (100; 300; 400) dazu ausgestaltet ist, in einer Montageposition und in einer zurückgehaltenen Position angeordnet zu sein, wobei in der Montageposition der Hakenabschnitt (120; 320; 420) in dem Abstand (D2) von dem horizontalen Profil (40) gehalten wird, da er von dem elastischen Element (110; 310; 52) daran gehindert wird, nach unten und nach innen zu dem horizontalen Profil (40) hin zu fallen;
und in der zurückgehaltenen Position das mindestens eine elastische Element (110; 310; 52) durch von dem Anbringungselement (50) ausgeübten Druck zusammengedrückt wird, sodass der Abstand (D2) zwischen dem Hakenabschnitt (120; 320; 420) und dem horizontalen Profil (40) verringert wird, indem der Hakenabschnitt (120; 320; 420) nach unten und nach innen zu dem horizontalen Profil (40) hin gezwungen wird, sodass das vertikale Profil (30) gegen das horizontale Profil (40) geklemmt wird.

2. Anordnung nach Anspruch 1, wobei das mindestens eine elastische Element (110; 310) ein Flügelabschnitt (110; 310) ist.

3. Anordnung nach Anspruch 2, wobei in der Montageposition der Flügelabschnitt (110; 310) mit einem Montagewinkel (A1) von dem Hauptkörper (105; 305) ausgehend angeordnet ist und in der zurückgehaltenen Position der Flügelabschnitt (110; 310) mit einem Zurückhaltewinkel (A2) von dem Hauptkörper (105; 305) ausgehend angeordnet ist, wobei der Zurückhaltewinkel (A2) größer als der Montagewinkel (A1) ist.

4. Anordnung nach einem der vorangehenden Ansprüche, wobei das Befestigungselement (100; 300) dazu ausgestaltet ist, während des Zusammenbaus des horizontalen Profils (40) und des vertikalen Profils (30) in der Montageposition angeordnet zu sein.

5. Anordnung nach einem der vorangehenden Ansprüche, wobei das Befestigungselement (100; 300) dazu ausgestaltet ist, in der zurückgehaltenen Position angeordnet zu sein, wenn das horizontale Profil (40) und das vertikale Profil (30) aneinander befestigt sind.

6. Anordnung nach einem der vorangehenden Ansprüche, wobei die Position des Befestigungselements (100; 300) dazu ausgestaltet ist, von der Montageposition in die zurückgehaltene Position geändert zu werden, wenn das Anbringungselement (50) in der Öffnung (140; 340) des Befestigungselements (100; 300) angebracht und/oder festgezogen ist.

7. Anordnung nach einem der Ansprüche 2 bis 6, wobei der Hakenabschnitt (120; 320) und der Flügelabschnitt (110; 310) sich hauptsächlich in eine voneinander entgegengesetzte Richtung erstrecken.

8. Anordnung nach einem der Ansprüche 2 bis 7, wobei der Hauptkörper (105), der Hakenabschnitt (120) und der mindestens eine Flügelabschnitt (110) einstückig konstruiert sind.

9. Anordnung nach einem der Ansprüche 2-7, wobei der Hauptkörper (305) und der mindestens eine Flügelabschnitt (310) als getrennte Elemente konstruiert sind und wobei der erste Endabschnitt (305a) des Hauptkörpers ein Aufnahmeteilstück (307) umfasst, das dazu ausgestaltet ist, den Flügelabschnitt (310) aufzunehmen.

10. Duschanordnung, umfassend mindestens eine Anordnung nach einem der Ansprüche 1-9, mindestens ein horizontales Profil (40) und mindestens ein vertikales Profil (30).

11. Duschanordnung nach Anspruch 10, wobei das horizontale Profil (40) einen oberen Profilabschnitt (44) und einen unteren Profilabschnitt (46) umfasst und das vertikale Profil (30) eine sich vertikal erstreckende Vertiefung (36) umfasst und wobei das Befestigungselement (100; 300) zwischen dem oberen Profilabschnitt (44) und dem unteren Profilabschnitt (46) angeordnet ist.

12. Duschanordnung nach Anspruch 11, wobei der obere Profilabschnitt (44) des horizontalen Profils (40) mindestens eine Öffnung (42) umfasst, die dazu ausgestaltet ist, ein Anbringungselement (50) aufzunehmen, um das Befestigungselement (100; 300) an dem horizontalen Profil (40) zu befestigen.

13. Duschanordnung nach Anspruch 11 oder 12, wobei der obere Profilabschnitt (44) des horizontalen Profils (40) ferner eine obere Oberfläche (44a) und eine untere Oberfläche (44b) umfasst, wobei ein oberes Ende (110a; 310a) eines elastischen Elements (110; 310) der Anordnung, welches in Form eines Flügelabschnitts (110; 310) vorliegt, in einer Position in enger Verbindung mit der unteren Oberfläche (44b) des oberen Profilabschnitts (44) angeordnet ist.

14. Verfahren zur Montage einer Duschanordnung, umfassend die folgenden Schritte:
Bereitstellen (210) eines Befestigungselements einer Anordnung nach einem der Ansprüche 1 bis 9, eines vertikales Profils, das eine Vertiefung aufweist, und eines horizontales Profils, das einen oberen Profilabschnitt und einen unteren Profilabschnitt aufweist;
Anordnen (220) des Befestigungselements zwischen dem oberen Profilabschnitt und dem unteren Profilabschnitt;
Anordnen (230) des Hakenabschnitts des Befestigungselements in der Vertiefung des vertikalen Profils;
Anbringen (240) eines Anbringungselements an dem Befestigungselement und dem horizontalen Profil, sodass das Befestigungselement seine Position von einer Montageposition zu einer zurückgehaltenen Position ändert.

15. Verfahren nach Anspruch 14, wobei ein elastisches Element (110; 310) der Anordnung, welches in Form eines Flügelabschnitts (110; 310) vorliegt, an einem ersten Endabschnitt (105a; 305a) eines Hauptkörpers (105; 305) der Anordnung angeordnet ist und wobei in der Montageposition der Flügelabschnitt (110; 310) mit einem Montagewinkel (A1) von dem Hauptkörper (105; 305) ausgehend angeordnet ist und in der zurückgehaltenen Position der Flügelabschnitt (110; 310) mit einem Zurückhaltewinkel (A2) von dem Hauptkörper (105; 305) ausgehend angeordnet ist, wobei der Zurückhaltewinkel (A2) größer als der Montagewinkel (A1) ist.

## Revendications

1. Un agencement comprenant un élément de fixation (50) et un élément de fixation (100 ; 300 ; 400) pour fixer un profilé horizontal (40) avec un profilé vertical (30) dans un ensemble de douche, dans lequel l'élément de fixation (100 ; 300 ; 400) comprend :
un corps principal (105 ; 305 ; 405) ayant une première partie d'extrémité (105a ; 305a ; 405a), une seconde partie d'extrémité (105b ; 305b ; 405b) et une partie surélevée (130 ; 330 ; 430) disposée entre elles, ladite partie surélevée (130 ; 330 ; 430) étant configurée pour être en conjonction étroite avec une surface inférieure (44b) d'une partie de profilé supérieur (44) du profilé horizontal (40), si l'élément de fixation (100 ; 300 ; 400) est fixé au profilé horizontal (40) ; dans lequel l'élément de fixation (100 ; 300 ; 400) comprend en outre :
une partie de crochet (120 ; 320 ; 420) étant disposée au niveau de la seconde partie d'extrémité (105b ; 305b ; 405b) pour s'engager avec un évidement (36) dans le profilé vertical (30),
selon lequel
le corps principal (105 ; 305 ; 405) comprend une ouverture (140 ; 340 ; 440), qui est disposée entre la partie élevée (130 ; 330 ; 430) et la première partie d'extrémité (105a ; 305a ; 405a) et est conçue pour recevoir l'élément de fixation (50) afin de fixer l'élément de fixation (100 ; 300 ; 400) au profilé horizontal (40) ;
et l'élément de fixation (100 ; 300 ; 400) comprend en outre : au moins un élément résilient (110 ; 310 ; 52), qui est soit agencé au niveau de la première partie d'extrémité (105a ; 305a) et réalisé sous la forme d'une partie d'aile (110 ; 310), soit agencé au-dessus de l'ouverture (440) et réalisé sous la forme d'un ressort (52), ladite ouverture (140 ; 340 ; 440) ayant la forme d'un trou traversant (140 ; 340 ; 440) sur le corps principal (105 ; 305 ; 405), ledit élément résilient (110 ; 310 ; 52) étant configuré pour maintenir une partie de l'élément de fixation (100 ; 300 ; 400) à une distance de la surface inférieure (44b) du profilé horizontal (40), maintenant ainsi la partie de crochet (120 ; 320 ; 420) à une distance (D2) du profilé horizontal (40) pendant l'assemblage ;
et dans lequel l'élément de fixation (100 ; 300 ; 400) est configuré pour être disposé dans une position de montage et dans une position de retenue, dans lequel, dans la position de montage, la partie de crochet (120 ; 320 ; 420) est maintenue à la distance (D2) du profilé horizontal (40) car elle est empêchée par l'élément résilient (110 ; 310 ; 52) de tomber vers le bas et vers l'intérieur vers le profilé horizontal (40) ;
et dans la position de retenue, le au moins un élément résilient (110 ;310 52) est comprimé par la pression appliquée par l'élément de fixation (50), réduisant la distance (D2) entre la partie de crochet (120 ; 320 ; 420) et le profilé horizontal (40) en forçant la partie de crochet (120 ; 320 ; 420) vers le bas et vers l'intérieur vers le profilé horizontal (40), de sorte que le profilé vertical (30) est serré vers le profilé horizontal (40).

2. L'agencement selon la revendication 1, dans lequel le au moins un élément résilient (110 ; 310) est une partie d'aile (110 ; 310).

3. L'agencement selon la revendication 2, dans lequel dans la position de montage, la partie d'aile (110 ; 310) est agencée avec un angle de montage (A1) par rapport au corps principal (105 ; 305) et dans la position de retenue la partie d'aile (110 ; 310) est agencée avec un angle de retenue (A2) par rapport au corps principal (105 ; 305), dans lequel l'angle de retenue (A2) est supérieur à l'angle de montage (A1).

4. L'agencement selon l'une quelconque des revendications précédentes, dans lequel l'élément de fixation (100 ; 300) est configuré pour être disposé en position de montage lors de l'assemblage du profilé horizontal (40) et du profilé vertical (30).

5. L'agencement selon l'une quelconque des revendications précédentes, dans lequel l'élément de fixation (100 ; 300) est configuré pour être disposé en position de retenue une fois que le profilé horizontal (40) et le profilé vertical (30) sont fixés l'un à l'autre.

6. L'agencement selon l'une quelconque des revendications précédentes, dans lequel la position de l'élément de fixation (100 ; 300) est configurée pour passer de la position de montage à la position de retenue une fois que l'élément de fixation (50) est fixé et/ou serré dans l'ouverture (140 ; 340) de l'élément de fixation (100 ; 300).

7. L'agencement selon l'une quelconque des revendications 2 à 6, dans lequel la partie crochet (120 ; 320) et la partie d'aile (110 ; 310) s'étendent principalement dans une direction opposée l'une à l'autre.

8. L'agencement selon l'une quelconque des revendications 2 à 7, dans lequel le corps principal (105), la partie crochet (120) et la au moins une partie d'aile (110) sont construits en une seule pièce.

9. L'agencement selon l'une quelconque des revendications 2 à 7, dans lequel le corps principal (305) et la au moins une partie d'aile (310) sont construits comme des éléments séparés, et dans lequel la première partie d'extrémité (305a) du corps principal comprend une section de réception (307) configurée pour recevoir la partie d'aile (310).

10. Un ensemble de douche comprenant au moins un aménagement selon l'une quelconque des revendications 1 à 9, au moins un profilé horizontal (40) et au moins un profilé vertical (30).

11. L'ensemble de douche selon la revendication 10, dans lequel le profilé horizontal (40) comprend une partie de profilé supérieure (44) et une partie de profilé inférieure (46), et le profilé vertical (30) comprend un évidement s'étendant verticalement (36), et dans lequel l'élément de fixation (100 ; 300) est disposé entre la partie de profilé supérieure (44) et la partie de profilé inférieure (46).

12. L'ensemble de douche selon la revendication 11, dans lequel la partie de profilé supérieur (44) du profilé horizontal (40) comprend au moins une ouverture (42) configurée pour recevoir un élément de fixation (50) afin de fixer l'élément de fixation (100 ; 300) au profilé horizontal (40).

13. L'ensemble de douche selon la revendication 11 ou 12, dans lequel la partie de profilé supérieur (44) du profilé horizontal (40) comprend en outre une surface supérieure (44a) et une surface inférieure (44b), dans lequel une extrémité supérieure (110a ; 310a) d'un élément résilient (110 ; 310) de l'agencement, qui se présente sous la forme d'une partie d'aile (110 ; 310), est agencée dans une position en étroite liaison avec la surface inférieure (44b) de la partie de profilé supérieur (44).

14. Un procédé de montage d'un ensemble de douche, comprenant les étapes suivantes :
fourniture (210) d'un élément de fixation d'un agencement selon l'une quelconque des revendications 1 à 9, un profilé vertical comportant un évidement et un profilé horizontal comportant une partie de profilé supérieure et une partie de profilé inférieure ;
mise en place (220) de l'élément de fixation entre la partie de profilé supérieur et la partie de profilé inférieur ;
mise en place (230) de la partie crochet de l'élément de fixation dans l'évidement du profilé vertical ;
fixation (240) d'un élément de fixation à l'élément de fixation et au profilé horizontal de sorte que l'élément de fixation change de position d'une position de montage à une position de retenue.

15. Le procédé selon la revendication 14, dans lequel un élément résilient (110 ; 310) de l'agencement, qui se présente sous la forme d'une partie d'aile (110 ; 310), est agencé au niveau d'une première partie d'extrémité (105a ; 305a) d'un corps principal (105 ; 305) de l'agencement, et dans lequel dans la position de montage, la partie d'aile (110 ; 310) est disposée avec un angle de montage (A1) par rapport au corps principal (105 ; 305) et dans la position de retenue, la partie d'aile (110 ; 310) est disposée avec un angle de retenue (A2) par rapport au corps principal (105 ; 305), dans lequel l'angle de retenue (A2) est supérieur à l'angle de montage (A1).
